# EUROPÄISCHE PATENTSCHRIFT

(11) **EP 1 464 932 B1**
(45) Veröffentlichungstag und Bekanntmachung des Hinweises auf die Patenterteilung: **13.12.2017**
(21) Anmeldenummer: 04450037.9
(22) Anmeldetag: 25.02.2004
(51) Int. Cl.: F02M 37/00, G01F 9/00, G01F 9/02, G05D 16/06

(54) **Druckregler und Vorrichtung zur kontinuierlichen Messung eines dynamischen Flüssigkeitsverbrauchs**
Pressure regulator and device for the continuous measurement of a dynamical liquid consumption
Régulateur de pression et dispositif pour la mesure continue de la consommation dynamique de liquid

(30) Priorität: 21.03.2003 AT 1982003
(43) Veröffentlichungstag der Anmeldung: 06.10.2004
(73) Patentinhaber: AVL List GmbH, 8020 Graz (AT)
(72) Erfinder: Wiesinger, Michael, Dr., 8010 Graz (AT); Purkathofer, Ferdinand, Ing., 8061 St. Radegund (AT)
(74) Vertreter: Patentanwälte Pinter & Weiss OG

(56) Entgegenhaltungen:
- EP-A2- 1 091 197
- DE-A1- 19 846 601
- US-A1- 5 284 120
- US-B1- 6 178 997

## Beschreibung

Die Erfindung betrifft einen Druckregler gemäß dem Oberbegriff von Anspruch 1, sowie eine Vorrichtung zur kontinuierlichen Messung eines dynamischen Flüssigkeitsverbrauchs gemäß dem Oberbegriff von Anspruch 6.

Für die Messung des Verbrauchs von Flüssigkeiten, speziell in der Anwendung für den Kraftstoffverbrauch von Motoren auf Prüfständen, sind diskontinuierlich betriebene Systeme auf Basis von Waagen bekannt. Sie weisen den Vorteil offener Systeme auf, nämlich die Eigenschaft, dass der Kraftstoff sowohl vom Meßsystem abgegeben als auch zeitweise und im Fördervolumen begrenzt in das System zurückgeführt werden kann. Dabei wird sowohl die abgegebene als auch die rückgeführte Kraftstoffmenge messtechnisch erfasst und bei der Angabe des Verbrauchs berücksichtigt. Offene Systeme erweisen sich insbesondere bei modernen Einspritzsystemen als vorteilhaft, da diese beim Start des Motors während des Druckaufbaus im Einspritzsystem begrenzt Kraftstoff in das Kraftstoffversorgungssystem - beim Fahrzeug letztlich in den Tank - zurückschieben. Als nachteilig erweisen sich derartige Waagen dadurch, dass sie immer wieder nachgefüllt werden müssen, und dadurch kein kontinuierlicher Messbetrieb möglich ist.

Zur kontinuierlichen Messung des Kraftstoffverbrauchs werden oft Meßgeräte herangezogen, die eine volumetrische Messung des Durchflusses durchführen. Mittels einer zusätzlichen Dichtemessung wird daraus die verbrauchte Kraftstoffmasse ermittelt, die die eigentlich benötigte Meßgröße darstellt. Eine direkte Messung des Masseverbrauches, die den Nachteil der zusätzlichen Dichtemessung vermeidet, läßt sich derzeit nur diskontinuierlich mit der Wägemethode sowie kontinuierlich mit Coriolis-Sensoren realisieren.

Moderne Verbrennungsmotoren benötigen für einen ordnungsgemäßen Betrieb zumeist definierte und durchflußunabhängige Druckverhältnisse sowohl in der Kraftstoffzuleitung als auch in der gegebenenfalls vorhandenen Kraftstoffrückleitung.

Beispielsweise ist gemäß dem österr. Gebrauchsmuster Nr. 3.350 eine Druckstabilisierungseinrichtung zur Stabilisierung des Vorlaufdrucks des Massestromsensors vorgesehen, um an der Anschlußstelle des Verbrauchers den geforderten geringen und konstanten Druck (von im Allgemeinen wenigen mbar) erzeugen zu können. Dafür muß ja der durchflußabhängige Druckabfall am Massestromsensor (von z.B. bis zu 2 bar) variabel kompensiert werden. Insbesonders müssen hochfrequente, sprunghafte oder pulsartige Entnahmen rasch berücksichtigt werden.

Zur Druckstabilisierung wird daher bei den oben genannten kontinuierlichen Verfahren der Kraftstoffmessung stromabwärts vom eigentlichen Durchflusssensor eine Druckreguliereinrichtung (Druckregler) angebracht, die den durchflussabhängigen Druck am Ausgang des Meßsystems auf einen konstanten Ausgangsdruck abregelt. Nachteilig bei einem derartigen Aufbau ist, dass konventionelle mechanische Druckregler wie eine "hydraulische Diode" agieren, womit gemeint ist, dass das strömende Medium den Regler nur in eine Richtung, nämlich stromabwärts durchströmen kann. Ein mit einem solchen Druckregler aufgebautes Meßsystem stellt kein offenes System dar. Falls nämlich Kraftstoff von der Einspritzanlage in das Meßsystem rückgeführt werden müsste, oder falls es durch Temperaturanstieg im Kraftstoffkreis bei gestopptem Verbraucher zu einer thermischen Expansion des Kraftstoffes kommt, entsteht, je nach Elastizität der Verrohrung, ein zumeist unzulässig hoher Druckanstieg im Kraftstoffsystem, der Leitungen und Einbauten belastet und allenfalls durch aufwendige Druckausgleichseinrichtungen abgefangen werden muß.

So beschreibt die DE 198 46 601 A1 ein Sammel- und Druckentlastungsmodul, das als federbelasteter Druckspeicher mit Sicherheits-Überdruckventil ausgebildet ist, jedoch keine Druckregeleinrichtung für durchfließende Flüssigkeit darstellt, die bei Auftreten von Rückströmungen bzw. Überdruck dieses Flüssigkeitsvolumen ausgleichen kann. In der EP 1 091 197 A2 ist hingegen eine Kombination eines Druckreglers mit einem Durchflusssensor geoffenbart, bei der gleichfalls kein rückströmendes Flüssigkeitsvolumen ausgeglichen werden kann, ebensowenig wie bei einem herkömmlichen Druckregler, welcher keine Möglichkeit einer Aufnahme von rückströmendem Kraftstoff aufweist, wie etwa in der US 5 284 120 A beschrieben ist. Schließlich beschreibt auch die US 6 178 997 B1 einen hydraulischen Regler, der als reiner Druckregler keine Maßnahmen aufweist, um bei einem Druckanstieg aufgrund einer Rückströmung ein bestimmtes Volumen aufnehmen zu können.

Aufgabe der vorliegenden Erfindung war es, einen Druckregler und eine Vorrichtung anzugeben, die eine kontinuierliche, genaue und auch zeitlich hoch auflösende Verbrauchsmessung mit geregeltem Ausgangsdruck für die Flüssigkeit gewährleistet und auch eine zumindest kurz andauernde Rückströmung oder auch temperaturbedingte Ausdehnung der Flüssigkeit zuzulassen.

Der eingangs beschriebene Druckregler weist zur Lösung der obigen Aufgabe erfindungsgemäß die Merkmale des kennzeichnenden Teils von Anspruch 1 auf. Der ohnehin notwendige Druckregler wird mit dem Vorteil der einfachen Auslegung der Anlage und auch der einfachen Nachrüstbarkeit bestehender Anlagen gleich als Ausgleichsgefäß genutzt. Aufgrund der Anordnung des Druckreglers mit Ausgleichsvolumen hinter dem Durchflußsensor wurde das zeitweilig rückgeschobene bzw. durch temperaturbedingte Ausdehnung vergrößerte Volumen bereits für die Durchflußmessung berücksichtigt.

In baulich einfacher und die Funktion des Druckreglers nicht nachteilig beeinflussender Weise kann das Ausgleichsvolumen im Druckregler dadurch gebildet sein, daß der Druckregler mit einer Tellermembran mit großer Auslenkmöglichkeit versehen ist.

Der Effekt der Veränderung der Federkonstante bei größeren Auslenkungen kann vorteilhafterweise bei einer Ausführungsform der Erfindung vermieden werden, bei welcher die Membran durch Druckluft mit regelbarem Druck beaufschlagt ist.

Gemäß einem weiteren Merkmal der Erfindung kann stromabwärts eines Dichtelementes der Ventilanordnung des Druckreglers ein Sicherheitsventil vorgesehen sein, womit sichergestellt ist, dass selbst bei über den im Normalbetrieb ausregelbaren Druck- bzw. Volumensanstieg hinausgehenden Bedingungen keine unzulässigen oder gefährlichen Werte im System auftreten können.

Wenn gemäß einer vorteilhaften Ausführungsform dieses Druckreglers das Sicherheitsventil mit Druckluft mit dem gleichen Druck wie das Auffangvolumen in Schließrichtung beaufschlagt ist, erfolgt damit automatisch die Abstimmung, d.h. das sichere Geschlossenhalten des Ventils im Bereich der normalerweise ausregelbaren Volumsveränderungen, des Sicherheitsventils auf den eingeregelten Systemdruck.

Um in einfacher und funktionssicherer Weise automatisch die Freigabe des Sicherheitsventils zu erreichen, wird gemäß einer vorteilhaften Ausführungsform der Erfindung die aus einer Bohrung im Gehäuseoberteil ausströmende Druckluft zu einer Einströmbohrung im Sicherheitsventil geleitet, wobei die Druckluftverbindung zum Sicherheitsventil mittels des mit der Tellermembran verbundenen Dichtelementes sperrbar ist.

Die vorteilhafte und vorzugsweise Anwendung findet der oben beschriebene Druckregler in einer erfindungsgemäßen Vorrichtung zur kontinuierlichen Messung eines dynamischen Flüssigkeitsverbrauchs, insbesonders von Kraftstoff.

Mit der erfindungsgemäßen Vorrichtung kann ein Verfahren durchgeführt werden, in dem bei Überschreitung eines wählbaren Drucks Flüssigkeit im Druckregler in ein durch eine Auslenkmöglichkeit einer Membran gebildetes Auffangvolumen geführt wird, wobei die Membran mit einer ebenfalls in einem Gehäuse angeordneten Ventilanordnung für die den Druck aufbauende Flüssigkeit gekoppelt ist, und wobei die Membran so weit ausgelenkt werden kann, bis ein mit der Membran verbundenes Dichtelement an der Oberseite eines Gehäuseoberteils anschlägt. Damit kann ohne großen apparativen oder verfahrenstechnischen Aufwand der Rückfluß bzw. die Volumensveränderung der zu messenden Flüssigkeit aufgefangen werden.

Dabei kann vorgesehen sein, daß ein Flüssigkeitsvolumen in den Druckregler geführt wird, welches Volumen dem den Druckanstieg verursachenden Volumen entspricht. Damit ist sichergestellt, dass das Meßergebnis nicht beeinflußt wird, da ja genau das im Druckspeicher aufgefangene Volumen bereits den Durchflußsensor passiert hatte.

Um das System gegenüber jeglichen Gefahren durch unzulässige Druckerhöhungen zu sichern, kann vorgesehen sein, dass nach Überschreitung eines in den Druckregler führbaren maximalen Volumens weiteres einen Druckanstieg verursachendes Volumen abgeführt wird.

In der nachfolgenden Beschreibung soll die Erfindung anhand eines Ausführungsbeispiels und unter Bezugnahme auf die beigefügten Zeichnungen näher erläutert werden. Dabei zeigt die Fig. 1 eine schematische Auslegung einer Anlage zur kontinuierlichen Kraftstoff-Verbrauchsmessung, Fig. 2 zeigt einen Druckregler gemäß dem Stand der Technik in Schnittdarstellung und Fig. 3 zeigt einen erfindungsgemäßen Druckregler, ebenfalls im Schnitt.

Über eine Leitung A und ein vorzugsweise elektromagnetisch betätigbares Füllventil 1 wird ein Tank 2, als Reservoir mit der Flüssigkeit, d.h. dem Kraftstoff, versorgt. Der Tank 2 weist weiter einen Schwimmerschalter bzw. Überlauf 3, einen Füllstandssensor 4, sowie einen vorzugsweise manuell betätigbaren Entleerhahn 5 auf.

Vom Tank 2 wird der Kraftstoff mittels einer vorzugsweise regelbaren Kraftstoffpumpe 6 über eine Leitung B dem kontinuierlich arbeitenden Durchflußsensor 7, vorzugsweise einem Coriolis-Sensor, zugeführt. Danach gelangt der Kraftstoff über vorzugsweise ein elektro-pneumatisch betätigbares Abschaltventil 8 in der Leitung B zur Abgabestelle, an welcher der Motor als Verbraucher (nicht dargestellt) angeschlossen wird und an welcher der Kraftstoff mit einem bestimmten, vorgegebenen Druck zur Verfügung stehen soll.

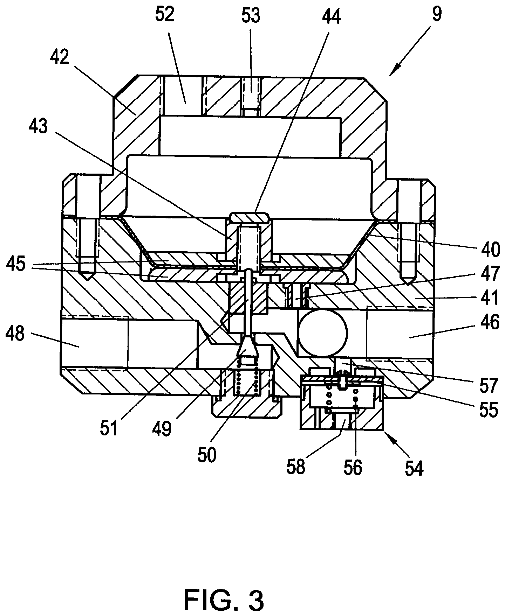

Hinter dem Abschaltventil 8 ist ein Druckregler 9 eingesetzt, der den Druck in der Leitung B hinter dem Durchflußsensor 7, also den Abgabedruck an den Verbraucher, entsprechend einem einstellbaren Vorgabewert einregelt. Wie nachfolgend unter Bezugnahme auf speziell die Fig. 3 erläutert wird, kann der Druckregler 9 eine gewisse Menge an Flüssigkeit aufnehmen, die vom Verbraucher über die Leitung B rückgeschoben wird oder auch eine Volumserhöhung abfangen, welche durch temperaturbedingte Ausdehnung der Flüssigkeit im System entsteht.

Eine weitere Leitung 10 kann vorteilhafterweise zwischen dem Druckregler 9 und dem Tank 2 vorgesehen sein, welche Leitung 10 von einem allfälligen Sicherheitsventil am Druckregler 9 ausgeht und Volumina sicher in den Tank 2 abführt, die über das vom Druckregler 9 aufnehmbare Volumen hinausgehen.

Eine weitere Leitung 11 kann vorteilhafterweise zwischen dem Druckregler 9 und der Abgabestelle an den Verbraucher von der Leitung B abzweigen und über ein elektropneumatisch schaltbares Entlüftungs-/Bypassventil 12 ebenfalls in den Tank 2 zurückführen. Dadurch kann bei eingeschaltetem Ventil 12 ein geräteinterner Entlüftungsbetrieb realisiert werden. Das Vorsehen einer weiteren Kraftstoff-Rückführleitung E, die eine direkte Verbindung zwischen einer eventuell vorhandenen Rückleitung des Verbrauchers und dem Tank 2 gewährleistet, ermöglicht eine Entlüftung der Kraftstoffleitungen bis zum Verbraucher.

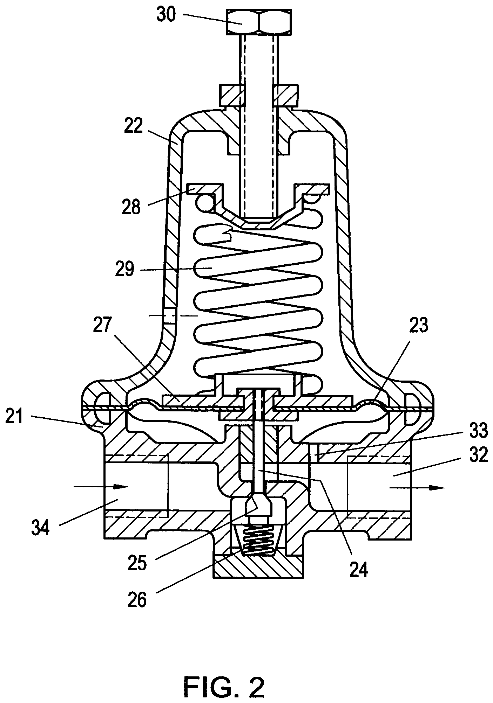

Ein herkömmlicher Druckregler, wie er bislang auch in Anlagen wie oben beschrieben zur Anwendung kam, ist in Fig. 2 im Schnitt dargestellt. Zwischen einem Gehäuseunterteil 21 und einem Gehäuseoberteil 22 ist einen Membran 23 eingespannt, die in Öffnungsrichtung über einen Stössel 24 auf ein Ventilelement 25 einwirkt, welches Ventilelement 25 durch eine Schließfeder 26 beaufschlagt ist. Auf der Membran 23 liegt eine Versteifungsplatte 27 auf, zwischen welcher Versteifungsplatte 27 und verstellbarem Widerlager 28 die Feder 29 eingespannt ist, welche Feder 29 die Einstellung des gewünschten Drucks mittels der Einstellschraube 30 erlaubt. Der Flüssigkeitsdruck am Ausgang 32 des Druckreglers wirkt durch die Bohrung 33 auch auf die Membran 23 auf der der Feder 29 gegenüberliegenden Seite ein. Wenn also der Flüssigkeitsdruck am Ausgang 32 über ein durch die Federkraft eingestelltes Maß hinausgeht, hebt die Membran 23 vom Stössel 24 ab und das Ventilelement 25 wird durch die Schließfeder 26 in Schließstellung gebracht. Wenn der Druck hingegen absinkt, drückt die Feder 29 die Membran 23 nach unten, wodurch über den Stössel 24 das Ventilelement 25 vom Sitz abgehoben wird. Dadurch wird auch die Verbindung zwischen dem Eingang 34 des Druckreglers und dessen Ausgang 32 hergestellt, so dass Flüssigkeit nachströmen und den Druck ausgangsseitig wieder soweit anheben kann, bis die Membran 23 wieder gegen die Kraft der Feder 29 so weit nach oben gedrückt ist, dass das Ventilelement 25 wieder in Schließstellung kommt.

Wenn jedoch der Druck am Ausgang 32 des Druckreglers bei geschlossenem Ventilelement 25 zu stark ansteigt, bzw. Flüssigkeit durch den Ausgang 32 in den Druckregler zurückgedrückt wird, kann die Membran 23 nur geringfügig nachgeben und der Druck wird immer weiter ansteigen bzw. muß durch zusätzliche Einbauten im System abgefangen werden.

Auch beim erfindungsgemäßen, in Fig. 3 dargestellten Druckregler 9 ist eine Membran 40 zwischen einem Gehäuseunterteil 41 und einem Gehäuseoberteil 42 eingespannt. Diese Membran 40 ist vorzugsweise ein Tellermembran, welche im Vergleich zu einer Flachmembran sehr weit ausgelenkt werden kann, vorzugsweise so weit, bis ein mit der Membran 40 verbundenes Dichtelement 43 an der Oberseite des Gehäuseoberteils 42 anschlägt. Das Dichtelement 43 mit seiner Dichtfläche 44 ist vorteilhafterweise an der oberen von zwei Versteifungsplatten 45 angebracht. Durch diese Auslenkung der Tellermembran 40 kann ein beträchtliches Volumen im Gehäuse des Druckreglers 9 aufgefangen werden, welches durch den Ausgang 46 und die Bohrung 47 unter die Membran 40 zurückgedrückt werden kann.

Im Normalbetrieb arbeitet auch der erfindungsgemäße Druckregler 9 wie der oben beschriebene herkömmliche Druckregler, wobei die Verbindung zwischen dem Eingang 48 und dem Ausgang 46 durch das Ventilelement 49 in Abhängigkeit vom Druck am Ausgang 46 des Druckreglers 9 gesteuert wird. Wie oben erläutert wird das Ventilelement 49 durch die Schließfeder 50 in Schließrichtung beaufschlagt und durch die Membran 40 mittels des Stössels 51 in Offenstellung gebracht, wenn der Druck am Ausgang 46 unter einen Wert abfällt, der durch die auf die Membran 40 von oben einwirkende Kraft definiert wird. Diese Kraft auf die Membran 40 kann im Fall des herkömmlichen Druckreglers mittels einer Einstellfeder ausgeübt werden. Vorteilhafterweise wird erfindungsgemäß diese Kraft aber auslenkungsunabhängig mittels Druckluft ausgeübt, welche vorzugsweise kontinuierlich durch die Bohrung 52 im Gehäuseoberteil 42 einströmt und durch die Bohrung 53 wieder ausströmt.

Um auch über das durch die Auslenkung der Tellermembran 40 hinausgehende Volums- bzw. Druckerhöhungen auf der Ausgangsseite des Druckreglers 9 sicher bewältigen zu können, ist ausgangsseitig ein Sicherheitsventil 54 vorgesehen. Dessen Ventilelement 55 wird durch eine Schließfeder 56 beaufschlagt und hält eine vom Ausgang 46 des Druckreglers ausgehende Druckentlastungspassage 57 im Normalbetrieb geschlossen. Um diese Schließstellung bei jedem ausgangsseitig eingestellten Druck sicher zu halten, wird bei der in Fig. 3 dargestellten Ausführungsform die aus der Bohrung 53 im Gehäuseoberteil ausströmende Druckluft zu einer Einströmbohrung 58 im Sicherheitsventil 54 geleitet. Jede über das Druckniveau der die Membran 40 beaufschlagende Druckluft gewählte Druckeinstellung wird automatisch auf das Sicherheitsventil 54 weitergegeben, wo dieses Druckniveau auch zusätzlich zur Kraft der Schließfeder 56 auf das Schließelement 55 wirkt.

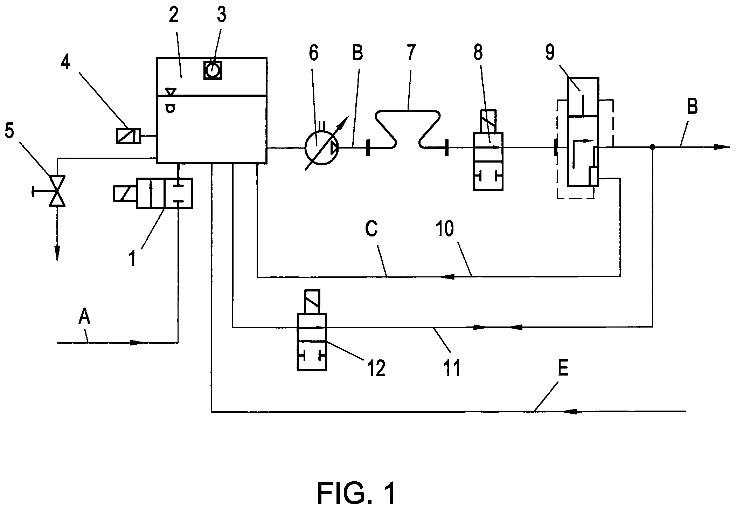

Wenn das durch die Auslenkung der Tellermembran 40 vorgegebene Ausgleichsvolumen vollständig gefüllt ist, liegt bei vollständiger Auslenkung die Dichtfläche 44 dichtend an der Innenseite der Bohrung 53 an und unterbindet das Ausströmen der Druckluft aus dem Gehäuseoberteil 42 weiter zum Sicherheitsventil 54. Damit wird dessen Schließelement 55 allein von der Schließfeder 56 beaufschlagt und kann öffnen, sobald der dadurch definierte Maximaldruck am Ausgang des Druckreglers 9 erreicht ist. Vorteilhafterweise ist die Druckentlastungspassage 57 durch die in Fig. 1 erwähnte Leitung 10 mit dem Tank 2 der Anlage verbunden.

## Patentansprüche

1. Druckregler (9) mit einem Gehäuse (41, 42) enthaltend
- ein Gehäuseunterteil (41) mit einem Eingang (48) und einem Ausgang (46),
- ein Gehäuseoberteil (42),
- eine zwischen dem Gehäuseunterteil (41) und dem Gehäuseoberteil (42) eingespannte Membran (40),
- eine Bohrung (47), die vom Ausgang (46) in ein von der Membran (40) begrenztes Volumen führt,
- wobei die Membran (40) so ausgestaltet ist, dass sie ausgelenkt werden kann, wenn Flüssigkeit durch den Ausgang (46) und die Bohrung (47) unter die Membran (40) zurückgedrückt wird, wodurch ein Volumen der Flüssigkeit im Gehäuse des Druckreglers aufgefangen werden kann,
- eine Ventilanordnung (49, 50) mit einem Ventilelement (49),
- wobei eine Verbindung zwischen dem Eingang (48) und dem Ausgang (46) durch das Ventilelement (49) in Abhängigkeit vom Druck am Ausgang (46) des Druckreglers (9) gesteuert wird,
- wobei die Membran (40) mit dem Ventilelement (49) gekoppelt ist,
- und wobei die Ventilanordnung (49, 50) so ausgestaltet ist, dass das Ventilelement (49) zur Druckregelung durch eine Schließfeder (50) in Schließrichtung beaufschlagt ist und durch die Membran (40) in eine Offenstellung gebracht werden kann,
**dadurch gekennzeichnet, dass**
- eine erste und eine zweite Bohrung (52, 53) im Gehäuseoberteil (42) vorgesehen sind,
- wobei die Bohrungen (52, 53) so angeordnet sind, dass Druckluft durch die erste Bohrung (52) in das Gehäuseoberteil (42) einströmen und durch die zweite Bohrung (53) wieder aus dem Gehäuseoberteil (42) ausströmen kann,
- ein mit der oberen Seite der Membran (40) verbundenes Dichtelement (43) mit einer Dichtfläche (44), wobei die Membran (40) so ausgestaltet ist, dass sie so weit durch die Flüssigkeit ausgelenkt werden kann, dass das Dichteelement (43) an der Oberseite des Gehäuseoberteils (42) anschlägt und die Dichtfläche (44) dichtend an der Innenseite der zweiten Bohrung (53) anliegt, wodurch das Ausströmen von Druckluft aus dem Gehäuseoberteil (42) unterbunden wird,
- wobei das Ventilelement (49) über die Membran (40) in Offenstellung gebracht werden kann, wenn der Druck am Ausgang (46) unter einen Wert abfällt, der durch die auf die Membran (40) von oben einwirkende Kraft definiert wird, die durch die Druckluft ausgeübt wird, welche durch die erste Bohrung (52) im Gehäuseoberteil (42) einströmt und durch die zweite Bohrung (53) wieder ausströmt.

2. Druckregler nach Anspruch 1, **dadurch gekennzeichnet, daß** die Membran (40) durch Druckluft mit regelbarem Druck beaufschlagt ist.

3. Druckregler nach einem der Ansprüche 1 oder 2, **dadurch gekennzeichnet, daß** stromabwärts des Ventilelements (49) der Ventilanordnung (49, 50) des Druckreglers (9) ein Sicherheitsventil (54) vorgesehen ist.

4. Druckregler nach Anspruch 3, **dadurch gekennzeichnet, daß** das Sicherheitsventil (54) in Schließrichtung mit Druckluft mit dem gleichen Druck wie das Auffangvolumen beaufschlagt ist.

5. Druckregler nach Anspruch 4, **dadurch gekennzeichnet, daß** die aus einer Bohrung (53) im Gehäuseoberteil ausströmende Druckluft zu einer Einströmbohrung (58) im Sicherheitsventil (54) geleitet wird.

6. Vorrichtung zur kontinuierlichen Messung eines dynamischen Flüssigkeitsverbrauchs, insbesonders von Kraftstoff, umfassend einen Tank (2), allenfalls eine Konditionieranlage, sowie eine vorzugsweise regelbare Pumpe (6), einen kontinuierlich arbeitenden Durchflußsensor für die Flüssigkeit, vorzugsweise einen Coriolis-Sensor (7), und einen Druckregler (9) zwischen Durchflußsensor (7) und Flüssigkeitsverbraucher, **dadurch gekennzeichnet, daß** der Druckregler (9) nach einem der Ansprüche 1 bis 5 gestaltet ist.

## Claims

1. A pressure regulator (9) with a housing (41, 42), comprising
- a housing lower part (41) with an inlet (48) and an outlet (46),
- a housing upper part (42),
- a membrane (40), which is clamped between the housing lower part (41) and the housing upper part (42),
- a bore (47), which leads from the outlet (46) into a volume delimited by the membrane (40),
- wherein the membrane (40) is adapted so that it can be deviated, when liquid is urged back through the outlet (46) and the bore (47) beneath the membrane (40), whereby a volume of liquid may be collected inside the housing of the pressure regulator,
- a valve assembly (49, 50) with a valve element (49),
- wherein a connection between the inlet (48) and the outlet (46) through the valve element (49) is controlled depending on the pressure at the outlet (46) of the pressure regulator (9),
- wherein the membrane (40) is coupled to the valve element (49),
- and wherein the valve assembly (49, 50) is adapted in order that the valve element (49) is acted upon by a closing spring (50) in the closing direction in order to control the pressure, and may be brought into an open position by the membrane (40),
**characterized in that**
- a first and a second bore (52, 53) are provided in the housing upper part (42),
- wherein the bores (52, 53) are positioned in a way that compressed air may flow through the first bore (52) into the housing upper part (42) and may flow again out of the housing upper part (42) through the second bore (53),
- a sealing element (43), which is connected to the upper side of the membrane (40), and which is provided with a sealing surface (44), wherein the membrane (40) is configured to be deflected by the liquid to such an extent, that the sealing element (43) abuts against the upper side of the housing upper part (42) and the sealing surface (44) sealingly contacts the inner side of the second bore (53), whereby the outflow of compressed air from the housing upper part (42) is prevented,
- wherein the valve element (49) may be brought by the membrane (40) in the open position, when the pressure at the outlet (46) drops below a value, which is defined by the force acting from above on the membrane (40), wherein the force is exerted by the compressed air, which flows through the first bore (52) into the housing upper part (42) and then flows again out through the second bore (53).

2. The pressure regulator of claim 1, **characterized in that** the membrane (40) is subject to compressed air at a controllable pressure.

3. The pressure regulator of claim 1 or 2, **characterized in that** a safety valve (54) is provided downstream of the valve element (49) of the valve assembly (49, 50) of the pressure regulator (9).

4. The pressure regulator of claim 3, **characterized in that** the safety valve (54) is subject in the closing direction to compressed air at the same pressure of the collecting volume.

5. The pressure regulator of claim 4, **characterized in that** the compressed air flowing out of a bore (53) in the housing upper part is supplied to an inlet bore (58) in the safety valve (54).

6. A device for the continuous measurement of a dynamic liquid consumption, in particular fuel, comprising a tank (2), possibly a conditioning system, as well as a pump (6), preferably a controllable pump, a continuously operating flow sensor for the liquid, preferably a Coriolis sensor (7), and a pressure regulator (9) between the flow sensor (7) and the liquid user, **characterized in that** the pressure regulator (9) is configured according to any of claims 1 to 5.

## Revendications

1. Régulateur de pression (9) doté d'un boîtier (41, 42) comportant :
- une partie inférieure de boîtier (41) dotée d'une entrée (48) et d'une sortie (46),
- une partie supérieure de boîtier (42),
- une membrane tendue entre la partie inférieure de boîtier (41) et la partie supérieure de boîtier (42) (40),
- un alésage (47) qui va de la sortie (46) jusque dans un volume limité par la membrane (40),
- la membrane (40) étant conçue pour pouvoir être déviée lorsque du liquide est refoulé par la sortie (46) et l'alésage (47) sous la membrane (40), ce qui permet de récupérer un volume du liquide dans le boîtier du régulateur de pression,
- un dispositif de soupape (49, 50) doté d'un élément soupape (49),
- une liaison entre l'entrée (48) et la sortie (46) étant contrôlée par l'élément soupape (49) en fonction de la pression à la sortie (46) du régulateur de pression (9),
- la membrane (40) étant couplée à l'élément soupape (49),
- et le dispositif de soupape (49, 50) étant conçu de manière à ce que l'élément soupape (49), pour réguler la pression, soit sollicité par un ressort de fermeture (50) dans le sens de fermeture et puisse être amené par la membrane (40) dans une position ouverte,
**caractérisé en ce**
- **qu'**il est prévu un premier et un second alésage (52, 53) dans la partie supérieure de boîtier (42),
- les alésages (52, 53) étant disposés de manière à ce que l'air comprimé puisse affluer par le premier alésage (52) dans la partie supérieure de boîtier (42) et puisse refluer par le second alésage (53) de la partie supérieure de boîtier (42),
- un élément d'étanchéité (43) raccordé à la face supérieure de la membrane (40) et doté d'une une surface d'étanchéité (44), la membrane (40) étant conçue de manière à pouvoir être déviée par le liquide de sorte que l'élément d'étanchéité (43) bute contre la face supérieure de la partie supérieure de boîtier (42) et à ce que la surface d'étanchéité (44) repose hermétiquement sur la face interne du second alésage (53), ce qui a pour effet d'empêcher la sortie d'air comprimé de la partie supérieure de boîtier 42),
- l'élément soupape (49) étant amené par la membrane (40) en position ouverte lorsque la pression à la sortie (46) chute en dessous d'une valeur qui est définie par la force agissant par le haut sur la membrane (40) et qui est exercée par l'air comprimé qui afflue par le premier alésage (52) dans la partie supérieure de boîtier (42) et reflue par le second alésage (53).

2. Régulateur de pression selon la revendication 1, **caractérisé en ce que** la membrane (40) est sollicitée avec de l'air comprimé à une pression réglable.

3. Régulateur de pression selon une des revendications 1 ou 2, **caractérisé en ce que**, en aval de l'élément soupape (49) du dispositif de soupape (49, 50) du régulateur de pression (9), il est prévu une soupape de sécurité (54).

4. Régulateur de pression selon la revendication 3, **caractérisé en ce que** la soupape de sécurité (54) est sollicitée dans le sens de fermeture avec de l'air comprimé à la même pression que le volume récupéré.

5. Régulateur de pression selon la revendication 4, **caractérisé en ce que** l'air comprimé refluant d'un alésage (53) pratiqué dans la partie supérieure de boîtier est conduit vers un alésage d'afflux (58) dans la soupape de sécurité (54).

6. Dispositif de mesure continue d'une consommation dynamique de liquide, en particulier de carburant, comprenant un réservoir (2), dans tous les cas une installation de conditionnement, ainsi qu'une pompe de préférence réglable (6), qu'un capteur de débit fonctionnant en continu pour le liquide, qu'un capteur Coriolis (7), et qu'un régulateur de pression (9) entre le capteur de débit (7), et un consommateur de liquide, **caractérisé en ce que** le régulateur de pression (9) est conçu selon une des revendications 1 à 5.
